# EUROPEAN PATENT APPLICATION

(11) **EP 2 631 791 A1**
(43) Date of publication of application: **28.08.2013**
(21) Application number: 13156430.4
(22) Date of filing: 22.02.2013
(51) Int. Cl.: G06F 9/44

(54) **Method and apparatus for analyzing application program by analysis of source code**

(30) Priority: 23.02.2012 KR 20120018428
(71) Applicant: Samsung Electronics Co., Ltd, Gyeonggi-do 443-742 (KR)
(72) Inventor: Im, Dong-Woo, Gyeonggi-do (KR); Lee, Won-Suk, Daejeon (KR); Choi, Soo-Hyun, Gyeonggi-do (KR)
(74) Representative: Jenkins, Richard Gavin

(57) **Abstract**

A method and an apparatus for analyzing source codes of an application program having open source codes and analyzing features which are used in the application program are provided. The method includes analyzing the application program according to the source codes in the application program, determining application program configuration information used in the application program, and classifying and outputting the application program configuration information according to the determined application program configuration information.

## Description

### BACKGROUND OF THE INVENTION

### 1. Field of the Invention:

The present invention relates to analysis of source codes. More particularly, the present invention relates to a method and apparatus for analyzing an application program by analysis of source code.

### 2. Description of the Related Art:

With respect to a general application program, which is an application program whose source codes is not open and/or accessible, in order to determine functions, features, operations, and other aspects supported by the general application program, users are dependent on data items written by a developer or a distributor. That is, because the general application program is provided in binary code, in order to determine features and functions of the application program, the users only rely upon information provided from a developer.

Accordingly, the user may not be able to determine certain technical features of an application program before using the application program and may not effectively search for an application program having a desired function effectively. Even in a case of an application program whose source codes is open and/or accessible, e.g., a web application program, in order to reduce a size and readability of the opened source codes, the opened source codes are distributed in a state where elements having a grammatical and/or spoken language meaning may be removed from variable names and/or other parts of the opened source code. Accordingly, it may be difficult for users to ascertain and classify the source codes although the source codes of the application program may be opened and/or accessible.

Therefore, a need exists for a method and apparatus for analyzing an application program by analysis of source code.

### SUMMARY OF THE INVENTION

Aspects of the present invention are to address at least the above-mentioned problems and/or disadvantages and to provide at least the advantages described below. Accordingly, an aspect of the present invention is to provide a method and apparatus for analyzing an application program by analysis of source codes.

Another aspect of the present invention is to provide a method and apparatus for analyzing source codes that are opened in an application program and analyzing functions provided by the corresponding application program.

Another aspect of the present invention is to provide a method and apparatus for analyzing whether any technology and/or function is used according to whether corresponding Application Programming Interfaces (APIs) will be used according to API names of standard APIs defined in standardization groups (e.g., the World Wide Web Consortium (W3C) and the Khronos Group), commonly used open APIs (e.g., the Google Map API and the Facebook API), user interface frameworks (e.g., the jQuery and the Sencha touch), that are often used, even in a case where source codes include elements wherein grammatical meanings are removed.

In accordance with an aspect of the present invention, a method of analyzing source codes in an application program is provided. The method includes analyzing the application program according to the source codes in the application program, determining application program configuration information used in the application program, and classifying and outputting the application program configuration information according to the determined application program configuration information.

In accordance with another aspect of the present invention, an apparatus for analyzing source codes in an application program is provided. The apparatus includes a controller for analyzing the application program according to the source codes in the application program, for determining application program configuration information used in the application program, and classifying and outputting the application program configuration information according to the determined application program configuration information and a display unit for displaying the output of the controller.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following detailed description taken in conjunction with the accompanying drawings, in which:

FIG. 1 is a block diagram illustrating an apparatus for analyzing source codes according to an exemplary embodiment of the present invention;

FIG. 2 is a block diagram illustrating an apparatus for analyzing source codes according to an exemplary embodiment of the present invention;

FIG. 3 is a block diagram illustrating an apparatus for analyzing source codes according to an exemplary embodiment of the present invention;

FIG. 4 is a flowchart illustrating an operation process of an apparatus for analyzing source codes according to an exemplary embodiment of the present invention;

FIG. 5 is a block diagram illustrating an apparatus for analyzing source codes according to an exemplary embodiment of the present invention;

FIGs. 6A and 6B illustrate a process of identifying a data according to an exemplary embodiment of the present invention; and

FIG. 7 illustrates an Application Programming Interface (API) category in a database according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The exemplary embodiments relate to a method and apparatus for analyzing source codes of application programs having open and/or accessible source codes, e.g., a web application program, and relates to analyzing of technologies, features, and operations of the application programs having the open and/or accessible source codes.

Exemplary embodiments of the present invention will be described herein below with reference to the accompanying drawings. In the following description, well-known functions or constructions may not be described in detail when they would obscure the invention in unnecessary detail. Also, the terms used herein are defined according to the functions of the exemplary embodiments of the present invention. Thus, the terms may vary depending on a user's or operator's intension and usage. That is, the terms used herein must be understood based on the descriptions made herein.

Hereinafter, a description will be given with respect to a method and apparatus for analyzing features of an application program by analysis of source codes.

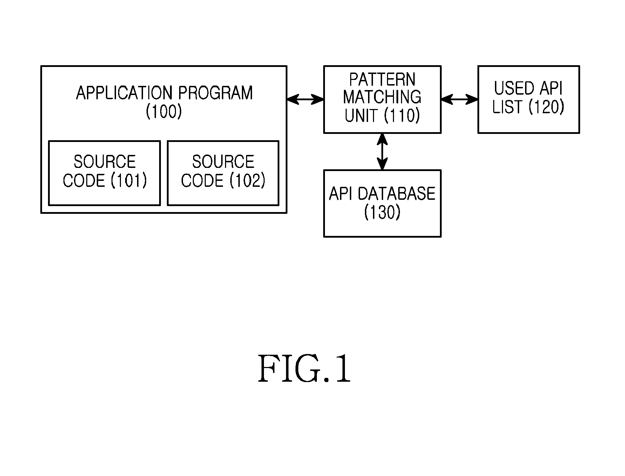

FIG. 1 is a block diagram illustrating an apparatus for analyzing source codes according to an exemplary embodiment of the present invention.

Referring to FIG. 1, the apparatus includes an application program 100, a pattern matching unit 110, a used Application Program Interface (API) list 120, and an API database 130. The application program 100 includes a plurality of source codes 101 and 102. The application program 100 is an application program whose source codes are opened, wherein an open source code is a source code that is accessible. For example, the application program 100 may be a web application program or any other suitable type of application having an open source code.

The pattern matching unit 110 may determine the used API list 120 corresponding to the application program 100 using the source codes 101 and 102 of the application program 100 and the API database 130 and may output the used API list 120. The pattern matching unit 110 scans the source codes 101 and 102 of the application program 100 and determines whether APIs defined in the API database 130 will be used. For example, when an API whose parameters have a grammatical meaning, e.g. "XMLHttpRequest", is used, then the pattern matching unit 110 analyzes the source codes 101 and 102 and statically or dynamically ascertains the grammatical meaning of the corresponding parameters.

For example, Table 1 shows example code of an API for returning information of an employee corresponding to an employee IDentification (ID) number that is designated by parameters, and such an API is assumed to be among provided open APIs. In order to ascertain a grammatical meaning in source codes of Table 1, the pattern matching unit 110 may analyze a Uniform Resource Location (URL) provided as a parameter of a function of an object generated using "new XMLHttpRequest ()" and may determine the grammatical meaning of the URL.

**Table 1**

| |
|---|
| xhr = new XMLHttpRequest (); |
| var host = http://samsung.com/ |
| var param = "getEmployeeinfo?ID=23456"; |
| var url = host + param; |
| xhr.open ("GET", url); |
| ............ |

That is, in Table 1, the object generated using "new XMLHttpRequest ()" is xhr.open. The parameters of the function xhr.open of the generated object are "GET" and url, wherein the url may be =http://samsung.com/"getEmployeeinfo?ID=23456". If the pattern matching unit 110 analyzes the parameters of the function xhr.open, it may know that the source codes are to acquire employee information for the employee ID number 23456. That is, the pattern matching unit 110 performs the above-described analysis method, which is a static method.

In a dynamic method in which the generated object and the function or parameters of the object are determined after the function or parameters are called, if the called parameters have a grammatical meaning, the pattern matching unit 110 may apply the analysis method. Source codes of the REpresentational State Transfer (REST) type may also be analyzed by the above-described analysis method.

The pattern matching unit 110 analyzes the source codes corresponding to the application program 100 and outputs the used API list 120 which lists APIs used in the current source codes. Alternatively, the pattern matching unit 110 may ascertain whether an application program that is currently analyzed through the analysis of the corresponding source codes uses an API of any application program. The API database 130 is a database which arranges all APIs which are designated as standards or are being standardized while being classified according to technologies and fields. The API database 130 includes a list of open APIs, user interface frameworks, and any other suitable and/or relevant API related information, all of which may be collectively referred to as application program configuration information.

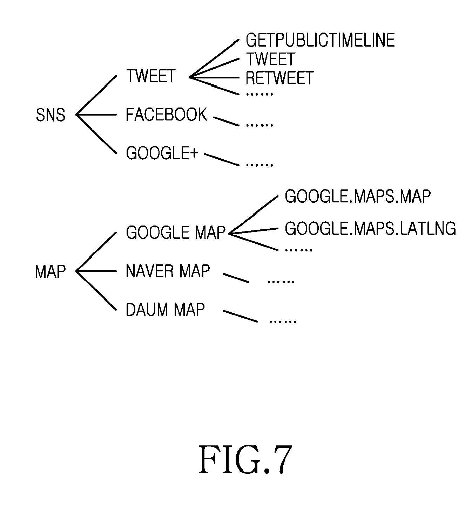

The API database 130 is configured to categorize several APIs and to perform a search according to a specific field. For example, as shown in FIG. 7, the API database 130 may be configured by a tree type of a web specific application program unit. However, the present invention is not limited thereto, and the API database 130 may be configured to be in any suitable manner and/or structure. Particularly, the API database 130 may separately categorize an API set whose parameters have a grammatical meaning, e.g., XMLHttpRequest. In accordance with the present exemplary embodiment of the present invention, at least one API used in the application program and at least one application program using the at least one API may be called program configuration information.

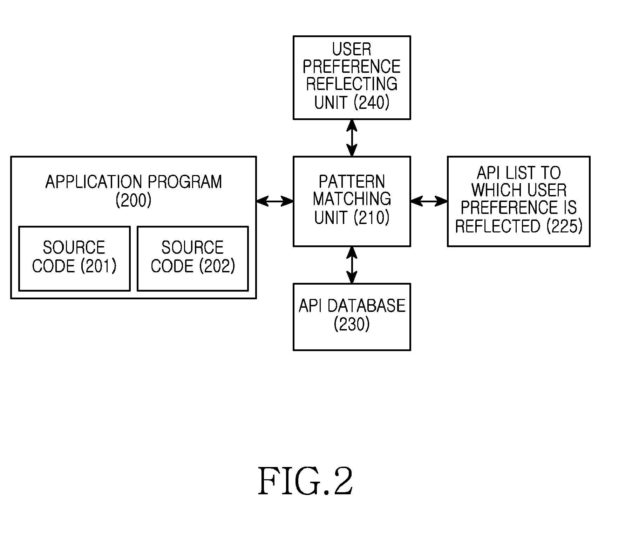

FIG. 2 is a block diagram illustrating an apparatus for analyzing source codes according to an exemplary embodiment of the present invention.

Referring to FIG. 2, the apparatus includes an application program 200, a pattern matching unit 210, an API database 230, a user preference reflecting unit 240, and a user preference API list 225.

The application program 200 includes a plurality of source codes 201 and 202. The application program 200 is an application program whose source codes are opened. For example, the application program 200 may be a web application program, or any other similar application program having open source code.

The pattern matching unit 210 determines a list of at least one API used in the application program 200 using the source codes 201 and 202 of the application program 200 and the API database 230 and outputs the determined list of APIs. The pattern matching unit 210 scans the source codes 201 and 202 of the application program 200 and determines whether APIs defined in the API database 130 will be used. For example, when an API whose parameters have a grammatical meaning, e.g., XMLHttpRequest, is used, then the pattern matching unit 210 analyzes the source codes 201 and 202 and statically or dynamically determines the grammatical meaning of the corresponding parameters, as shown in Table 1.

The pattern matching unit 210 analyzes the corresponding source codes and outputs an API list used in the current source codes. Alternatively, the pattern matching unit 210 may determine whether an application program currently analyzed through the analysis of the source codes of the application program is any application program. The pattern matching unit 210 analyzes the corresponding source codes and outputs the API list used in the current source codes. Alternatively, the pattern matching unit 210 may determine whether an application program currently analyzed through the analysis of the source codes of the application program uses an API of any application program.

The API database 230 is a database which arranges all APIs which are designated as standards or are being standardized while being classified according to technologies and fields. The API database 230 includes an API list of open APIs, user interface frameworks, and other API related information. The API database 230 is configured to categorize several APIs and perform a search according to a specific field. For example, as shown in FIG. 7, the API database 230 may be configured by a tree type of a web specific application program unit.

Particularly, the API database 230 may separately categorize an API set whose parameters have a grammatical meaning, e.g., XMLHttpRequest. The user preference reflecting unit 240 provides user preference that is input by a user to the pattern matching unit 210. The pattern matching unit 210 may perform a search of a type designated by the user or may generate a result of a type which the user wants to receive, using the provided user preference. That is, the pattern matching unit 210 determines whether a source code of an application program selected by the user is included in a source code analysis process and outputs the user preference API list 225, in which the user preference is reflected.

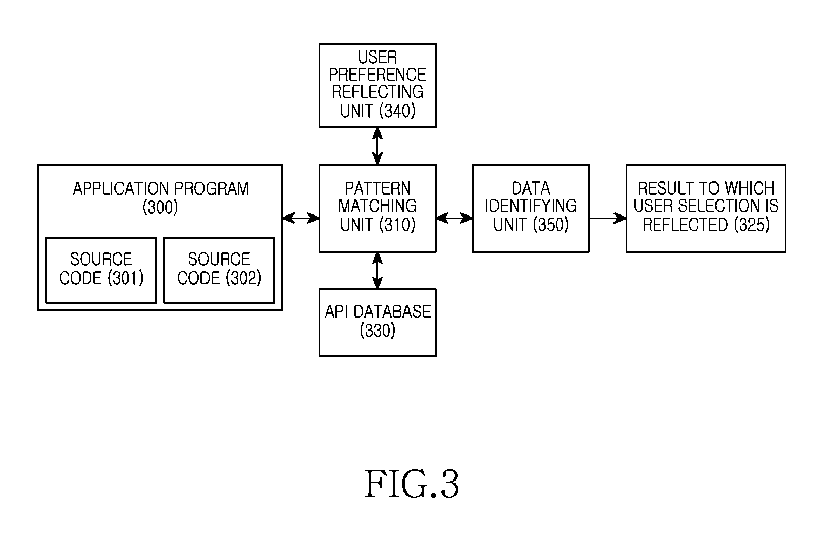

FIG. 3 is a block diagram illustrating an apparatus for analyzing source codes according to an exemplary embodiment of the present invention.

Referring to FIG. 3, the apparatus includes an application program 300, a pattern matching unit 310, an API database 330, a user preference reflecting unit 340, and a data identifying unit 350. The application program 300 includes a plurality of source codes 301 and 302. The application program 300 is an application program whose source codes are opened. For example, the application program 300 may be a web application program or any other application program having an opened source code.

The pattern matching unit 310 determines a list of at least one API used in the application program 300 using the source codes 301 and 302 of the application program 300 and the API database 330 and outputs the determined API list. The pattern matching unit 310 scans the source codes 301 and 302 of the application program 300 and determines whether APIs defined in the API database 330 will be used.

For example, when an API whose parameters have a grammatical meaning, e.g., XMLHttpRequest, is used, then the pattern matching unit 310 analyzes the source codes 301 and 302 and statically or dynamically determines the grammatical meaning of the corresponding parameters, as shown in Table 1. The pattern matching unit 310 analyzes the source codes 301 and 302 and outputs an API list used in the current source codes. Alternatively, the pattern matching unit 310 may determine whether the application program 300 that is currently being analyzed through the analysis of the source codes 301 and 302 uses an API of any application program.

The API database 330 is a database which arranges all APIs which are designated as standards or are being standardized while being classified according to technologies and fields. The API database 330 includes an API list of open APIs and user interface frameworks, and any other relevant API related information. The API database 330 is configured to categorize several APIs and perform a search according to a specific field. For example, as shown in FIG. 7, the API database 330 may be configured by a tree type of a web specific application program unit.

Particularly, the API database 330 may separately categorize an API set whose parameters have a grammatical meaning, e.g., XMLHttpRequest. The user preference reflecting unit 340 provides a user preference that is input by a user to the pattern matching unit 310. The pattern matching unit 310 may perform a search of a type designated by the user or may generate a result of a type which the user wants to receive, using the provided user preference. That is, the pattern matching unit 310 checks whether a source code of an application program selected by the user is included in a source code analysis process and outputs an API list to which the user preference is reflected.

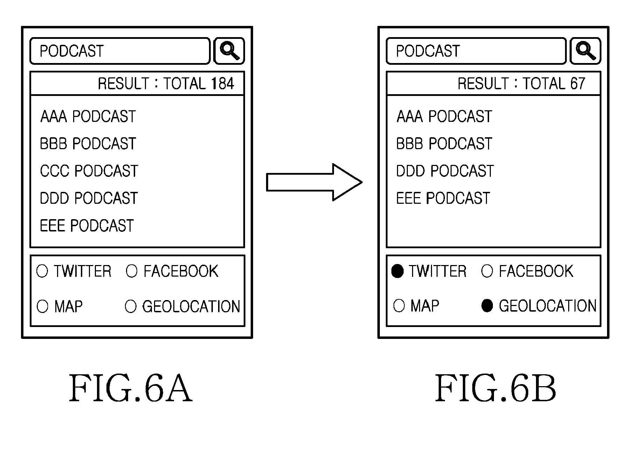

The data identifying unit 350 processes the generated API list, and generates and outputs a result according to a type which the user wants to change. The data identifying unit 350 may be used in categorizing the generated API list or generating a tag. That is, the data identifying unit 350 may filter an API set which is meaningful to the user from among APIs used in the application program and displays a result 325 which reflects the selection of the user. For example, in a case where a podcast application program provides a twitter function, when the podcast application program includes a function capable of writing and sharing tweets rather than a function using an API which reads a timeline, the data identifying unit 350 may determine that the podcast application program provides a meaningful tweet function. Another example will be shown below with reference to FIGs. 6A and 6B.

FIGs. 6A and 6B illustrate a process of identifying a data according to an exemplary embodiment of the present invention.

Referring to FIGs. 6A and 6B, in order to allow the pattern matching unit 310 to determine whether there are APIs for Twitter, Facebook, Map, and Geolocation, the user preference reflecting unit 340 allows the pattern matching unit 310 to search the APIs for Twitter, Facebook, Map, and Geolocation. When such APIs exist, the pattern matching unit 310 informs the data identifying unit 350 that APIs for Twitter, Facebook, Map, and Geolocation have been found. In order to inform the user that the APIs for Twitter, Facebook, Map, and Geolocation have been found, the data identifying unit 350 displays Twitter, Facebook, Map, and Geolocation, as shown in a lower part of FIG. 6A. The data identifying unit 350 displays names of application programs which uses the APIs of Twitter, Facebook, Map, and Geolocation, as shown in an upper part of FIG. 6A.

If the user selects Twitter and Geolocation, as shown in FIG. 6B, the data identifying unit 350 displays application programs which use the APIs of Twitter and Geolocation. As shown in FIG. 6B, the user may know that an application program, for example CCC podcast, does not use the APIs of Twitter and Geolocation.

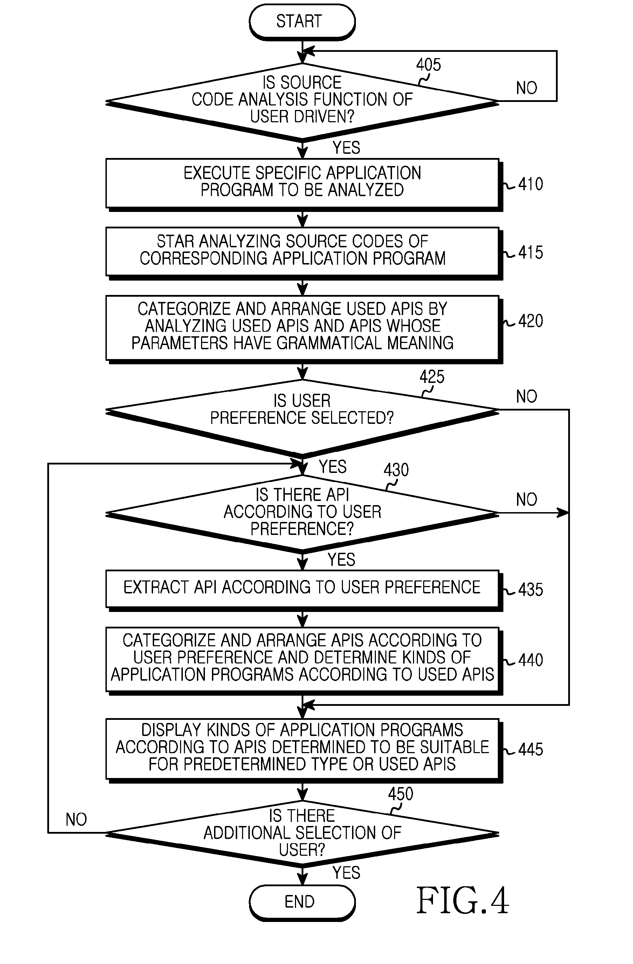

FIG. 4 is a flowchart illustrating an operation process of an apparatus for analyzing source codes according to an exemplary embodiment of the present invention.

Referring to FIG. 4, when it is determined that a source code analysis function of a user is driven in step 405, the apparatus of the present exemplary embodiment receives and executes a specific application program to be analyzed from the user in step 410. Next, the apparatus starts analyzing source codes for the corresponding application program in step 415.

The apparatus then categorizes and arranges the used APIs by analyzing APIs used in the specific application programs and APIs whose parameters have a grammatical meaning in step 420. Accordingly, the apparatus may determine the APIs used in the specific application program and may determine whether the APIs are used in any application program.

The apparatus then determines whether a preference of the user is selected in step 425. When the preference of the user is selected in step 425, the apparatus determines whether there is an API of an application program according to the preference of the user in step 430. When there is the API of the application program, the apparatus extracts the API according to the preference of the user in step 435.

The apparatus categorizes and arranges the APIs according to the preference of the user and determines kinds of the application programs according to the used APIs in step 440. The apparatus then displays kinds of applications, according to APIs, that are determined to be suitable for a predetermined type or the used APIs in step 445. If the preference of the user is not selected in step 425, then the apparatus displays kinds of applications according to APIs determined to be suitable for a predetermined type or the used APIs in step 445.

When a preference of the user is additionally selected in step 450, the apparatus returns to step 430 in order to determine whether there is an API of an application program corresponding to the additionally selected preference of the user. Herein, as shown in FIG. 6B, the additional selection of the user may be a selection for a specific application program. For example, as shown in FIG. 6B, if the user selects Twitter and Geolocation, then application programs which use APIs of Twitter and Geolocation are displayed. As shown in FIG. 6B, the user may know that an application program, e.g., CCC podcast, does not use the APIs of Twitter and Geolocation. The method described above in relation with FIG. 4 under of the present invention may be provided as one or more instructions in one or more software modules stored in the respective apparatus.

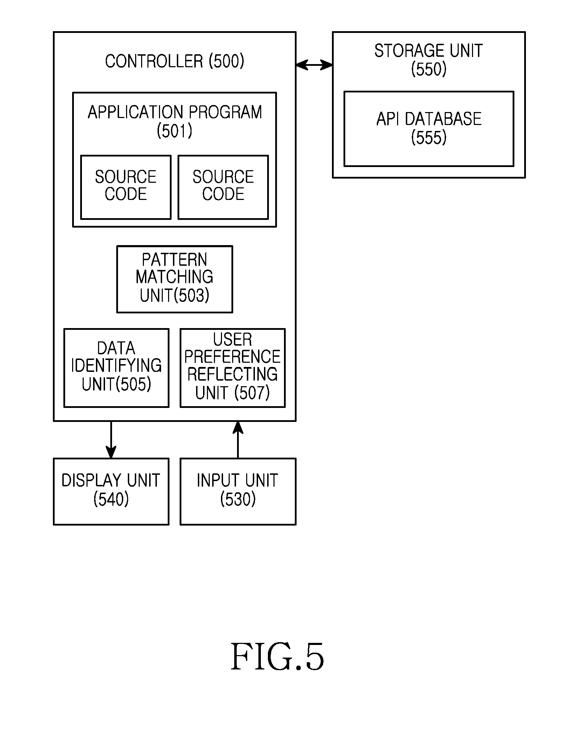

FIG. 5 is a block diagram illustrating an apparatus for analyzing source codes according to an exemplary embodiment of the present invention.

Referring to FIG. 5, the apparatus includes a controller 500, a storage unit 550, an input unit 530, and a display unit 540.

The controller 500 controls overall operations of the apparatus. Particularly, the controller 500 includes and/or controls an application program 501 including a plurality of source codes, a pattern matching unit 503, a data identifying unit 505, and a user preference reflecting unit 507 according to the present exemplary embodiment. The storage unit 550 stores programs for controlling an overall operation of the apparatus and temporary data generated when the programs are executed or generated by the user of the apparatus. Particularly, the storage unit 550 includes an API database 555.

The input unit 530 provides input of a user to the controller 500. The input unit 530 may be one of a touch screen, a keyboard, a mouse, or any other similar and/or suitable input device allowing for a user input. The display unit 540 displays an output of the controller 500. The display unit 540 may be any suitable display device, for example, a Liquid Crystal Display (LCD), a Light Emitting Diode (LED) display, or any other similar display device.

The application program 501 includes the plurality of source codes. The application program 501 is an application program whose source codes are opened. For example, the application program 501 may be a web application program or any other similar application program having open source codes. The pattern matching unit 503 determines an API used in the corresponding application program using the source codes of the application program 501 and the API database 555 and outputs the determined API list.

The pattern matching unit 503 scans the source codes of the application program 501 and determines whether APIs defined in the API database 555 will be used. For example, when an API whose parameters have a grammatical meaning is used, then the pattern matching unit 503 analyzes the source codes and statically or dynamically determines the grammatical meaning of the corresponding parameters, as shown in Table 1. The pattern matching unit 503 analyzes the corresponding source code and outputs an API list used in the current source code. Alternatively, the pattern matching unit 503 may determine whether an application program that is currently being analyzed through the analysis of the corresponding source code uses an API of any application program.

The API database 555 is a database which arranges all APIs which are designated as standards or are being standardized while being classified according to technologies and fields. The API database 555 includes an API list of open APIs and user interface frameworks, and any other similar and relevant API data. The API database 555 is configured to categorize several APIs and perform a search according to a specific field. For example, as shown in FIG. 7, the API database 555 may be configured by a tree type of a web specific application program unit. Particularly, the API database 555 may separately categorize an API set whose parameters have a grammatical meaning.

The user preference reflecting unit 507 provides a user preference that is input by a user to the pattern matching unit 503. The pattern matching unit 503 may perform a search of a type designated by the user or may generate a result of a type which the user wants to receive, using the provided user preference. That is, the pattern matching unit 503 determines whether a source code of an application program selected by the user is included in a source code analysis process and outputs an API list according to the user preference.

The data identifying unit 505 processes the generated API list, and generates and outputs a result according to a type which the user wants to change. The data identifying unit 505 may be used in categorizing the generated API list or generating a tag. That is, the data identifying unit 505 may be used in filtering an API set which is meaningful to the user from among APIs used in the application program and displays a result according to the selection of the user on the display unit 540.

For example, in a case where a podcast application program provides a Twitter function, when the podcast application program includes a function capable of writing and sharing tweets rather than a function using an API which reads a timeline, the data identifying unit 505 may determine that the podcast application program provides a meaningful tweet function. For example, as shown in FIG. 6A, in order to allow the pattern matching unit 503 to determine whether there are APIs for Twitter, Facebook, Map, and Geolocation, the user preference reflecting unit 507 allows the pattern matching unit 503 to search the APIs for Twitter, Facebook, Map, and Geolocation APIs.

When these APIs exist, the pattern matching unit 503 informs the data identifying unit 505 that Twitter, Facebook, Map, and Geolocation APIs have been found. In order to inform the user that Twitter, Facebook, Map, and Geolocation APIs are found, the data identifying unit 505 displays Twitter, Facebook, Map, and Geolocation, as shown in a lower part of FIG. 6A. The data identifying unit 505 also displays names of application programs which uses the APIs of Twitter, Facebook, Map, and Geolocation, as shown in an upper part of FIG. 6A.

If the user selects Twitter and Geolocation, as shown in FIG. 6B, then the data identifying unit 505 displays application programs which use the APIs of Twitter and Geolocation on the display unit 540. As shown in FIG. 6B, the user may know that an application program, e.g., CCC podcast, does not use the APIs of Twitter and Geolocation.

The apparatus according to exemplary embodiments of the present invention may analyze and categorize source codes used in a web application program. The apparatus may analyze an application program and may perform tagging based on the application program's operations and features. Accordingly, the apparatus may provide a search function based on a tag generated by the tagging.

For example, the apparatus may search an application program which provides a function for recommending broadcasting to the user using geolocation information and sharing the recommended broadcasting using Twitter from among podcast programs. Alternatively, the apparatus may search for an application program having a function for recording location information using Global Positioning System (GPS) coordinates and may display the location information on a map using a geolocation API.

Also, the user may determine whether it is possible for an application program to be normally operated in a used environment. For example, if a specific API is not supported by a web browser used by the user, the user may decide to not use an application program which uses the specific API. In accordance with exemplary embodiments of the present invention, the user may determine whether a specific API is supported by an application program before the application program is executed.

Also, the user may analyze a current trend of a web application program using the apparatus according to exemplary embodiments of the present invention. The user may analyze the latest trend through calculation of a statistics data for technologies, user interface frameworks, and any other similar entity which are currently and frequently used by a plurality of application programs. Also, the user may analyze a trend, that is, the user may determine whether any technologies are combined and used. For example, the user may analyze that application programs which mainly use APIs for newscasts provide a sharing function through Twitter and/or Facebook.

In accordance with exemplary embodiments of the present invention, the apparatus may analyze and classify technologies, features, and source codes used in a web application program. The apparatus may analyze an application program and may perform tagging based on the used technologies and features. The apparatus may provide a search function based on a tag generated by the tagging. Also, in accordance with exemplary embodiments of the present invention, the user may determine whether it is possible for an application program to be normally operated in a used environment.

Program instructions to perform a method described herein, or one or more operations thereof, may be recorded, stored, or fixed in one or more computer-readable storage media. The program instructions may be implemented by a computer. For example, the computer may cause a processor to execute the program instructions. The media may include, alone or in combination with the program instructions, data files, data structures, and the like. Examples of computer-readable media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The program instructions, that is, software, may be distributed over network coupled computer systems so that the software is stored and executed in a distributed fashion. For example, the software and data may be stored by one or more computer readable recording mediums. Also, functional programs, codes, and code segments for accomplishing the example embodiments disclosed herein can be easily construed by programmers skilled in the art to which the embodiments pertain based on and using the flow diagrams and block diagrams of the figures and their corresponding descriptions as provided herein. Also, the described unit to perform an operation or a method may be hardware, software, or some combination of hardware and software. For example, the unit may be a software package running on a computer or the computer on which that software is running.

Additionally, in accordance with exemplary embodiments of the present invention, the user may analyze a current trend of a web application program. The user may analyze the latest trend through calculation of a statistics data for technologies, user interface frameworks, and any other similar entity, which are currently and frequently used by a plurality of application programs. Furthermore, in accordance with exemplary embodiments of the present invention, the user may determine whether any technologies are combined and used.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method of analyzing source codes in an application program, the method comprising:
analyzing the application program according to the source codes in the application program;
determining application program configuration information used in the application program; and
classifying and outputting the application program configuration information according to the determined application program configuration information.

2. The method of claim 1, wherein the application program configuration information is at least one API used in the application program and at least one application program which uses the at least one API.

3. The method of claim 1, wherein the determination of the application program configuration information used in the application program comprises:
verifying at least one API used in the application program from a database; and
determining an application program in which the verified at least one API is used.

4. The method of claim 3, wherein the database is configured to categorize a plurality of APIs and perform a search according to a specific item.

5. The method of claim 3, further comprising, when preference of a user is selected, verifying at least one API used in an application program according to the selected user preference and determining the application program in which the verified at least one API is used.

6. The method of claim 1, wherein the classifying and outputting of the application program configuration information according to the determined application program configuration information comprises:
outputting the determined application program configuration information; and
filtering and outputting the determined application program configuration information according to an additional selection of a user when there is the additional selection of the user for the determined application program configuration information.

7. The method of claim 1, further comprising, before the analyzing of the application program, receiving the application program to be analyzed.

8. An apparatus for analyzing source codes in an application program, the apparatus comprising:
a controller for analyzing the application program according to the source codes in the application program, for determining application program configuration information used in the application program, and for classifying and outputting the application program configuration information according to the determined application program configuration information; and
a display unit for displaying the output of the controller.

9. The apparatus of claim 8, wherein the application program configuration information is at least one API used in the application program and at least one application program which uses the at least one API.

10. The apparatus of claim 8, wherein, when determining the application program configuration information used in the application program, the controller verifies at least one API used in the application program from a database and determines an application program in which the verified at least one API is used, and
wherein the apparatus further includes the database.

11. The apparatus of claim 10, wherein the database is configured to categorize a plurality of APIs and perform a search according to a specific item.

12. The apparatus of claim 10, wherein, when the preference of a user is selected, the controller verifies at least one API used in an application program according to the selected user preference and determines the application program in which the verified at least one API is used.

13. The apparatus of claim 8, wherein, when the controller performs the classifying and outputting of the application program configuration information according to the determined application program configuration information, the controller outputs the determined application program configuration information and filters and outputs the determined application program configuration information according to an additional selection of a user when there is the additional selection of the user for the determined application program configuration information.

14. The apparatus of claim 8, wherein the controller receives the application program to be analyzed before the analyzing of the application program, and
wherein the apparatus further includes an input unit for receiving a user input from a user of the apparatus and for transmitting the user input for the application program to be analyzed to the controller.
